(19) Europäisches Patentamt

European Patent Office

Office européen des brevets

(11) **EP 1 632 807 A2**

(12) **EUROPEAN PATENT APPLICATION**

(43) Date of publication:
08.03.2006 Bulletin 2006/10

(51) Int Cl.:
*G02F 1/13363* (2006.01)    *G02F 1/1335* (2006.01)
*G02F 1/1337* (2006.01)

(21) Application number: 05019308.5

(22) Date of filing: 06.09.2005

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **07.09.2004 JP 2004259874**

(71) Applicant: **Toshiba Matsushita Display Technology Co., Ltd.**
**Minato-ku,**
**Tokyo 108-0075 (JP)**

(72) Inventor: **Joten, Kazuhiro,**
**Intel. Prop. Div.,**
**Toshiba**
**4-chome**
**Minato-ku**
**Tokyo 108-00-0075 (JP)**

(74) Representative: **HOFFMANN EITLE**
**Patent- und Rechtsanwälte**
**Arabellastrasse 4**
**81925 München (DE)**

(54) **Liquid crystal display device**

(57)    A liquid crystal display device including a plurality of pixels (PX) arranged in a matrix includes a liquid crystal display panel (LPN) in which a liquid crystal layer (LQ) is held between an array substrate (AR) and a counter-substrate (CT) that are disposed to face each other, a first polarization control element (POL1) provided on an outer surface of the array substrate (AR), which is opposed to a surface of the array substrate (AR) that holds the liquid crystal layer (LQ), and a second polarization control element (POL2) provided on an outer surface of the counter-substrate (CT), which is opposed to a surface of the counter-substrate (CT) that holds the liquid crystal layer (LQ). When a vertical direction (Y axis) of a screen is set to be a reference azimuth, the liquid crystal layer (LQ) includes liquid crystal molecules (40) that are homogeneously aligned in an azimuth different from the reference azimuth.

FIG. 2

EP 1 632 807 A2

## Description

The present invention relates generally to a liquid crystal display device, and more particularly to a transmissive liquid crystal display device that displays an image using backlight.

In a transmissive liquid crystal display device, polarization control elements for controlling the polarization state of light are provided, respectively, on outer surfaces of an array substrate and a counter-substrate that constitute a liquid crystal display panel. Each of the polarization control elements is a circular polarization plate that is formed by combining a polarizer plate and two kinds of phase plates (i.e. a 1/2 wavelength plate that provides a phase difference of 1/2 wavelength between an ordinary ray and an extraordinary ray with respect to light of a predetermined wavelength, and a 1/4 wavelength plate that provides a phase difference of 1/4 wavelength between an ordinary ray and an extraordinary ray with respect to light of a predetermined wavelength). Specifically, each polarization control element controls the polarization state of light of a predetermined wavelength, which is incident on a liquid crystal layer, so that the light may become circularly polarized light (see, e.g. Jpn. Pat. Appln. KOKAI Publication No. 01-270024).

There are various uses of the liquid crystal display device having the above-described structure. Because of its features, special attention has been paid to the use of the liquid crystal display device as a display device for a mobile device. In consideration of the application to the mobile device, there is a strong demand for improvement in viewing-angle characteristics at a time when an image is displayed, from the standpoint of practical use.

For example, the liquid crystal display device, which is configured to have polarization control elements each including the aforementioned two kinds of phase plates, has a viewing-angle characteristic of 30° (CR (contrast) = 10), which is very narrow and poses a problem. In particular, there is a demand for improvement in viewing-angle characteristics in a case where a liquid crystal display panel is observed in a viewing direction with an inclination from a normal direction of the panel toward the upper side or lower side of the screen.

The present invention has been made in consideration of the above-described problem, and the object of the invention is to provide a liquid crystal display device with good optical characteristics, which can achieve reduction in thickness and manufacturing cost.

According to an aspect of the present invention, there is provided a liquid crystal display device including a plurality of pixels arranged in a matrix, the device comprising: a transmissive liquid crystal display panel in which a liquid crystal layer is held between a first substrate and a second substrate that are disposed to face each other; a first polarization control element provided on an outer surface of the first substrate, which is opposed to a surface of the first substrate that holds the liquid crystal layer, the first polarization control element being configured to pass light in a polarization state of elliptically polarized light; and a second polarization control element provided on an outer surface of the second substrate, which is opposed to a surface of the second substrate that holds the liquid crystal layer, the second polarization control element being configured to pass light in a polarization state of elliptically polarized light, whose direction of rotation is opposite to a direction of rotation of the elliptically polarized light that is passed through the first polarization control element, wherein when a vertical direction of a screen is set to be a reference azimuth, the liquid crystal layer includes liquid crystal molecules that are homogeneously aligned in an azimuth that is different from the reference azimuth.

The present invention can provide a liquid crystal display device with good optical characteristics, which can achieve reduction in thickness and manufacturing cost.

This summary of the invention does not necessarily describe all necessary features so that the invention may also be a sub-combination of these described features.

The invention can be more fully understood from the following detailed description when taken in conjunction with the accompanying drawings, in which:

FIG. 1 schematically shows the structure of a liquid crystal display device according to an embodiment of the present invention;

FIG. 2 schematically shows a cross-sectional structure of the liquid crystal display device shown in FIG. 1;

FIG. 3 is a view for explaining a positional relationship between a director of liquid crystal molecules, absorption axes of first and second polarizer plates, and slow axes of first and second phase plates in the liquid crystal display device shown in FIG. 2;

FIG. 4 schematically shows the structure of a liquid crystal display device according to a comparative example and first to third embodiments of the invention;

FIG. 5 shows examples of angles of absorption axes and slow axes to an X axis in a first polarization control element and a second polarization control element that are applied to the comparative example, and retardation values of a first phase plate and a second phase plate;

FIG. 6 shows measurement results of optical characteristics in the comparative example and the first to third embodiments;

FIG. 7 is a characteristic diagram that simulates the viewing-angle dependency of contrast in the liquid crystal display device according to the comparative example;

FIG. 8 is a characteristic diagram that simulates the viewing-angle dependency of gray level inversion in the liquid crystal display device according to the comparative example;

FIG. 9 is a characteristic diagram that simulates the viewing-angle dependency of transmittance in a horizontal direction of a screen of the liquid crystal display device according to the comparative example;

FIG. 10 is a characteristic diagram that simulates the viewing-angle dependency of transmittance in a vertical direction of the screen of the liquid crystal display device according to the comparative example;

FIG. 11A shows the directors of liquid crystal molecules in the first to third embodiments;

FIG. 11B shows examples of angles of absorption axes and slow axes to an X axis in a first polarization control element and a second polarization control element that are applied to the first to third embodiments, and retardation values of a first phase plate and a second phase plate;

FIG. 12 is a characteristic diagram that simulates the viewing-angle dependency of contrast in the liquid crystal display device according to the first embodiment;

FIG. 13 is a characteristic diagram that simulates the viewing-angle dependency of gray level inversion in the liquid crystal display device according to the first embodiment;

FIG. 14 is a characteristic diagram that simulates the viewing-angle dependency of transmittance in a horizontal direction of a screen of the liquid crystal display device according to the first embodiment;

FIG. 15 is a characteristic diagram that simulates the viewing-angle dependency of transmittance in a vertical direction of the screen of the liquid crystal display device according to the first embodiment;

FIG. 16 is a characteristic diagram that simulates the viewing-angle dependency of contrast in the liquid crystal display device according to the second embodiment;

FIG. 17 is a characteristic diagram that simulates the viewing-angle dependency of gray level inversion in the liquid crystal display device according to the second embodiment;

FIG. 18 is a characteristic diagram that simulates the viewing-angle dependency of transmittance in a horizontal direction of a screen of the liquid crystal display device according to the second embodiment;

FIG. 19 is a characteristic diagram that simulates the viewing-angle dependency of transmittance in a vertical direction of the screen of the liquid crystal display device according to the second embodiment;

FIG. 20 is a characteristic diagram that simulates the viewing-angle dependency of contrast in the liquid crystal display device according to the third embodiment;

FIG. 21 is a characteristic diagram that simulates the viewing-angle dependency of gray level inversion in the liquid crystal display device according to the third embodiment;

FIG. 22 is a characteristic diagram that simulates the viewing-angle dependency of transmittance in a horizontal direction of a screen of the liquid crystal display device according to the third embodiment; and

FIG. 23 is a characteristic diagram that simulates the viewing-angle dependency of transmittance in a vertical direction of the screen of the liquid crystal display device according to the third embodiment.

A liquid crystal display device according to an embodiment of the present invention will now be described with reference to the accompanying drawings.

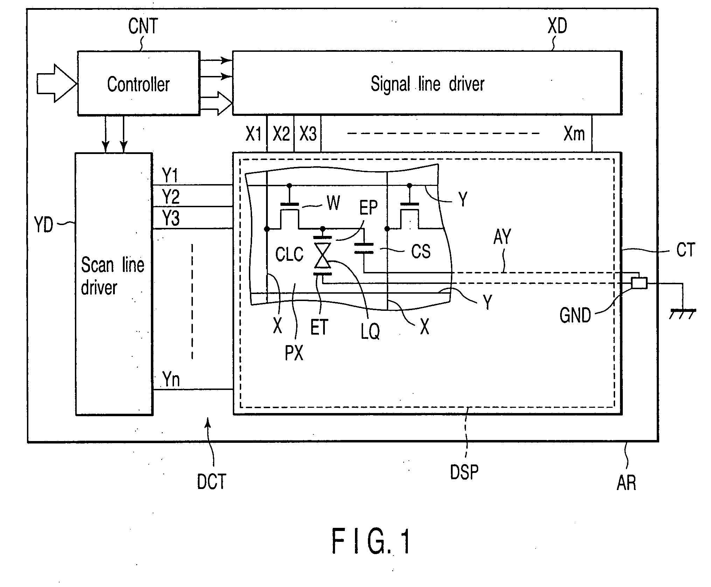

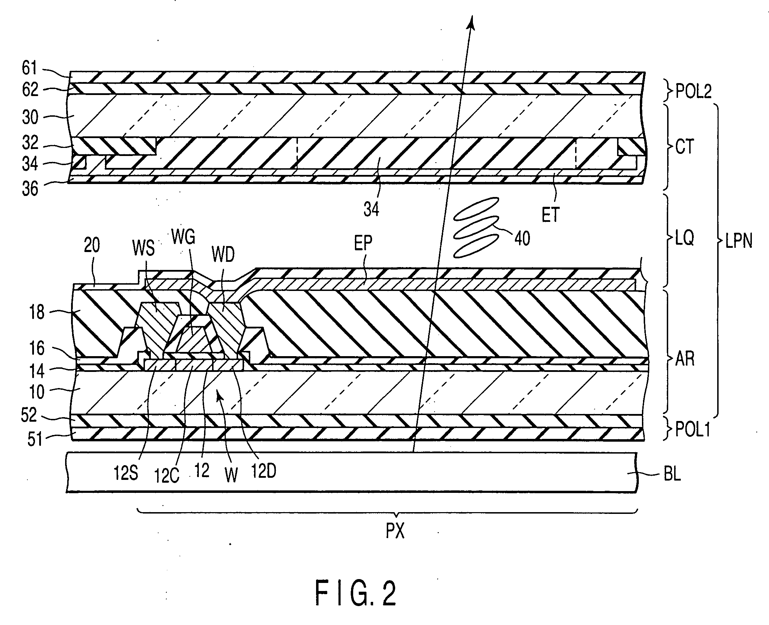

As is shown in FIG. 1 and FIG. 2, the liquid crystal display device is an active-matrix type transmissive color liquid crystal display device that includes a transmissive liquid crystal display panel LPN. The liquid crystal display panel LPN is configured to include an array substrate (first substrate) AR, a counter-substrate (second substrate) CT that is disposed to face the array substrate AR, and a liquid crystal layer LQ that is held between the array substrate AR and counter-substrate CT.

The liquid crystal display device further includes a first polarization control element POL1 that is provided on an outer surface of the array substrate AR, which is opposed to the surface thereof holding the liquid crystal layer LQ (i.e. on one of outer surfaces of the liquid crystal display panel LPN), and a second polarization control element POL2 that is provided on an outer surface of the counter-substrate CT, which is opposed to the surface thereof holding the liquid crystal layer LQ (i.e. on the other outer surface of the liquid crystal display panel LPN). In addition, the liquid crystal display device includes a backlight unit BL that illuminates the liquid crystal display panel LPN from the first polarization control element POL1 side.

In the liquid crystal display device, a display region DSP that displays an image includes a plurality (m × n) of pixels PX arranged in a matrix.

The array substrate AR is formed using an insulating substrate 10 with light transmissivity, such as a glass substrate or a quartz substrate. Specifically, the array substrate AR includes, within the display region DSP, an (m × n) number of pixel electrodes EP arranged in association with the respective pixels; an n-number of scan lines Y (Y1 to Yn) formed in a row direction of the pixel electrodes EP; an m-number of signal lines X (X1 to Xm) formed in a column direction of the pixel electrodes EP; an (m × n) number of switching elements W (e.g. thin-film transistors) arranged near intersections between the scan lines Y and signal lines X in the respective pixels PX; and auxiliary capacitance lines AY, each of which is capacitive-coupled to the associated pixel electrode EP so as to constitute an auxiliary capacitance CS in parallel to a liquid crystal capacitance CLC.

In a drive circuit region DCT near the display region DSP, the array substrate AR includes at least parts of a scan line driver YD that is connected to the n-number of scan lines Y and a signal line driver XD that is connected to the m-number of signal lines X. The scan line driver YD successively supplies scan signals (drive signals) to the n-number of scan lines Y under the control of a controller CNT. The signal line driver XD supplies video signals (drive signals) to the m-number of signal lines X under the control of the controller CNT at a timing when the switching elements W in each row are turned on by the scan signal. Thereby, the pixel electrodes EP in each row are set at pixel potentials corresponding to the video signals that are supplied via the associated switching elements W.

Each of the switching elements W is an N-channel thin-film transistor and includes a polysilicon semiconductor layer 12 that is disposed on the insulating substrate 10. The polysilicon semiconductor layer 12 includes a source region 12S and a drain region 12D, and a channel region 12C that is sandwiched between the source region 12S and drain region 12D. The polysilicon semiconductor layer 12 is covered with a gate insulation film 14.

A gate electrode WG of the switching element W is connected to the associated scan line Y (or formed integral with the associated scan line Y). The gate electrode WG is disposed on the gate insulation film 14 along with the scan line Y and auxiliary capacitance line AY. The gate electrode WG, scan line Y and auxiliary capacitance line AY are covered with an interlayer insulation film 16.

A source electrode WS and a drain electrode WD of the thin-film transistor W are disposed on both sides of the gate electrode WG on the interlayer insulation film 16. The source electrode WS is connected to the associated signal line X (or formed integral with the associated signal line X) and is put in contact with the source region 12S of the polysilicon semiconductor layer 12. The drain electrode WD is connected to the associated pixel electrode EP (or formed integral with the pixel electrode EP) and is put in contact with the drain region 12D of the polysilicon semiconductor layer 12. The source electrode WS, drain electrode WD and signal line X are covered with an organic insulation film 18.

The pixel electrode EP is disposed on the organic insulation film 18 and is electrically connected to the drain electrode WD. The pixel electrode EP is formed of a metallic film with light transmissivity, such as an indium tin oxide (ITO) film. Pixel electrodes EP associated with all pixels PX are covered with an orientation film 20.

On the other hand, the counter-substrate CT is formed using an insulating substrate 30 with light transmissivity, such as a glass substrate or a quartz substrate. Specifically, the counter-substrate CT includes, in the display region DSP, a black matrix 32 that defines the individual pixels PX, color filters 34 that are disposed in the respective pixels defined by the black matrix 32, and a counter-electrode ET.

The black matrix 32 is disposed to be opposed to the wires, such as scan lines Y and signal lines X, provided on the array substrate AR. The color filters 34 are formed of color resins of a plurality of colors, for instance, three primary colors of red, blue and green. The red colored resin, blue colored resin and green colored resin are disposed in association with the red pixel, blue pixel and green pixel, respectively.

The counter-electrode ET is disposed to face the pixel electrodes EP of all pixels PX. The counter-electrode ET is formed of a metallic film with light transmissivity, such as an indium tin oxide (ITO) film. In addition, the counter-electrode ET is covered with an orientation film 36.

When the counter-substrate CT and the array substrate AR are disposed such that the orientation films 20 and 36 face each other, a predetermined gap is provided between both substrates by a spacer (not shown). In this embodiment, the gap at each pixel PX is set at about 4.8 $\mu$m.

The liquid crystal layer LQ is formed of a liquid crystal composition including liquid crystal molecules 40, which is sealed in the gap between the orientation film 20 of the array substrate AR and the orientation film 36 of the counter-substrate CT. In this embodiment, MJ041113 (manufactured by Merck & Co., $\Delta n = 0.065$) is used as the liquid crystal composition, and the twist angle of liquid crystal molecules 40 is set at 0 deg. with homogeneous alignment.

Each of the first polarization control element POL1 and second polarization control element POL2 controls the polarization state of light that passes therethrough. To be more specific, the first polarization control element POL1 controls the polarization state of light that passes therethrough so that light in a polarization state of elliptically polarized light may be incident on the liquid crystal layer LQ. Thus, the polarization state of backlight, which is incident on the first polarization control element POL1, is changed to, e.g. counterclockwise elliptic polarization when it passes through the first polarization control element POL1. The backlight, which emanates from the first polarization control element POL1, enters the liquid crystal layer LQ while maintaining the elliptically polarized state.

The second polarization control element POL2 passes light in a polarization state, which is rotated in a direction opposite to the direction of the elliptically polarized light emanating from the first polarization control element POL1. Thus, that part of the light emerging from the liquid crystal layer LQ and being incident on the second polarization control element POL2, which has, e.g. a clockwise elliptic polarization state, passes through the second polarization control element POL2.

The first polarization control element POL1 comprises at least one first polarizer plate 51 and at least one first phase plate 52. The second polarization control element POL2 comprises at least one second polarizer plate 61 and at least one second phase plate 62. Each of the first phase plate 52 and second phase plate 62 is a so-called 1/4 wavelength plate that provides a phase difference of 1/4 wavelength between an ordinary ray and an extraordinary ray with respect to light of a predetermined wavelength.

The polarizer plate used in this embodiment has an absorption axis and a transmission axis, which are perpendicular to each other in a plane that intersects at right angles with the direction of travel of light. The polarizer plate extracts light with a plane of vibration in one direction parallel to the transmission axis, i.e. light in a linearly polarized state, from light with planes of vibration in random directions.

The phase plate used in this embodiment has a slow axis and a fast axis that intersect at right angles. In discussion of birefringence, the slow axis corresponds to an axis with a relatively high refractive index, and the fast axis corresponds to an axis with a relatively low refractive index. It is assumed that the slow axis agrees with a plane of vibration of an ordinary ray, and the fast axis agrees with a plane of vibration of an extraordinary ray. A retardation value $\Delta n \cdot d$ (nm) of the phase plate is defined by

$$(ne \cdot d - no \cdot d)$$

where no is the refractive index of the ordinary ray, ne is the refractive index of the extraordinary ray, and d is the thickness of the phase plate in the direction of travel of light.

In the description below, the positions of the polarizer plates 51 and 61 are specified by an absorption axis 51T and an absorption axis 61T, respectively. The positions of the phase plates 52 and 62 are specified by slow axes 52D and 62D, respectively.

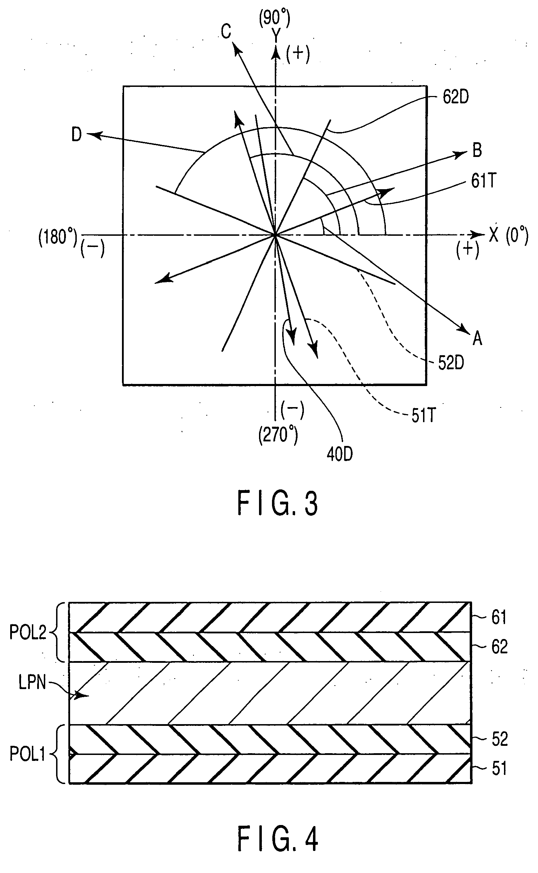

As is shown in FIG. 3, when the liquid crystal display device according to the present embodiment is viewed from the counter-substrate side, an X axis and a Y axis, which intersect at right angles, are defined, for the sake of convenience, in a plane parallel to the major surface of the array substrate AR (or counter-substrate CT). The X axis corresponds to the horizontal direction of the screen, and the Y axis corresponds to the vertical direction of the screen. A positive (+) direction on the X axis (i.e. 0° azimuth) corresponds to the right side of the screen, and a negative (-) direction on the X axis (i.e. 180° azimuth) corresponds to the left side of the screen. In addition, a positive (+) direction on the Y axis (i.e. 90° azimuth) corresponds to the upper side of the screen, and a negative (-) direction on the Y axis (i.e. 270° azimuth) corresponds to the lower side of the screen.

In this case, the second polarizer plate 61 is disposed at an angle A (deg) that is defined between the absorption axis 61T of the second polarizer plate 61 and the X axis. The second phase plate 62 is disposed at an angle B (deg) that is defined between the slow axis 62D of the second phase plate 62 and the X axis. The first polarizer plate 51 is disposed at an angle C (deg) that is defined between the absorption axis 51T of the first polarizer plate 51 and the X axis. The first phase plate 52 is disposed at an angle D (deg) that is defined between the slow axis 52D of the first phase plate 52 and the X axis.

As has been described above, each of the first phase plate 52 and second phase plate 62 is a so-called 1/4 wavelength plate that provides a phase difference of 1/4 wavelength between light components of a predetermined wavelength, which pass through the fast axis and slow axis. In other words, the first phase plate 52 is disposed such that the slow axis in its plane has a predetermined angle (acute angle) to the absorption axis (or transmission axis) of the first polarizer plate 51, whereby the first phase plate 52 functions to convert linearly polarized light, which emerges from the first polarizer plate 51, to elliptically polarized light having a predetermined ellipticity (= minor-axis direction amplitude/major-axis direction amplitude). Similarly, the second phase plate 62 is disposed such that the slow axis in its plane has a predetermined angle (acute angle) to the absorption axis (or transmission axis) of the second polarizer plate 61, whereby the second phase plate 62 functions to convert linearly polarized light, which emerges from the second polarizer plate 61, to elliptically polarized light having a predetermined ellipticity.

In general, the birefringent material of the phase plate has such characteristics that the refractive index no for an ordinary ray and the refractive index ne for an extraordinary ray depend on the wavelength of light. Thus, in order to form circularly polarized light by providing a predetermined retardation in the whole range of wavelengths between, e.g. 450 nm and 650 nm, which are used for color display, at least two kinds of phase plates (1/2 wavelength plate and 1/4 wavelength plate) are combined to decrease the wavelength dependency of the retardation value of the phase plate.

On the other hand, in the present embodiment, at least one of the first polarization control element POL1 and second polarization control element POL2 comprises a single polarizer plate and a single phase plate. In the example shown in FIG. 2, the first polarization control element POL1 is formed by combining the single first polarizer plate 51 and a single phase plate (first phase plate 52 functioning as a 1/4 wavelength plate), and the second polarization control element POL2 is formed by combining the single second polarizer plate 61 and a single phase plate (second phase plate 62 functioning as a 1/4 wavelength plate). In the first polarization control element POL1 and second polarization control element POL2, the angle between the absorption axis of the polarizer plate and the slow axis of the phase plate is optimized, thereby forming elliptically polarized light with a substantially constant ellipticity regardless of the wavelength of incident light. The condition for optimization of the first polarization control element POL1 is that the acute angle θ formed between the absorption axis 51T of the first polarizer plate 51 and the slow axis 52D of the first phase plate 52 is set in the range between 25° and 70°. Similarly, the condition for optimization of the second polarization control element POL2 is that the acute angle θ formed between the absorption axis 61T of the second polarizer plate 61 and the slow axis 62D of the second phase plate 62 is set in the range between 25° and 70°.

Next, more desirable ranges of the angle θ are discussed.

As regards lights of specific wavelengths that are used for color display (e.g. 470 nm (blue), 550 nm (green) and 610 nm (red)), the ellipticity varies depending on the angle between the absorption axis 51T and slow axis 52D (or the angle between the absorption axis 61T and slow axis 62D). In order to realize a good display quality, it is desirable to set the ellipticities of lights of all specific wavelengths to be substantially equal and high.

When the angle θ is 45°, the difference in ellipticity between light of a wavelength of 550 nm and light of a wavelength of 470 nm is about 0.15, and degradation occurs in optical characteristics. By contrast, when the angle θ is an acute angle that is less than 40° or greater than 45°, the difference in ellipticity, which is obtained with light of each wavelength, can sufficiently be reduced. This means that a polarization state with substantially uniform ellipticity can be obtained with respect to lights in the whole range of wavelengths for color display (450 nm to 650 nm). Thus, there is a tendency of improvement in optical characteristics.

More preferably, if the angle θ is set at an acute angle of 30° or less, or if the angle θ is set at an acute angle of 50° or more, elliptically polarized light with a difference in ellipticity of 0.1 or less can be formed with respect to lights in the range of all wavelengths (450 nm to 650 nm) that are used for color display, and a further improvement in optical characteristics can be expected.

In the case where the first polarization control element POL1 and second polarization control element POL2 having the above-described structures are applied to the liquid crystal display device according to this embodiment, the angle θ is set at an acute angle of 40° or less or at an acute angle of 45° or more, and more preferably at an acute angle of 30° or less or at an acute angle of 50° or more. Thereby, the difference between the maximum value and minimum value of the ellipticity of light in the range of 450 nm to 650 nm, which is incident on the liquid crystal layer in an elliptically polarized state, can be set at less than 0.15, preferably 0.1 or less. Thus, the optical characteristics can be improved and a good display quality can be realized.

Assume now that attention is paid to green light with a relatively high luminosity factor, e.g. light with a wavelength of, e.g. 550 nm. In this case, if the ellipticity of elliptically polarized light, which is formed through the first polarization control element POL1 (or second polarization control element POL2) is less than 0.65, the difference from the ellipticity of light of other wavelength can be reduced (i.e. the wavelength dependency can be reduced). However, degradation occurs in display quality in the transmissive liquid crystal display device including this first polarization control element POL1 (or second polarization control element POL2). In particular, if the ellipticity decreases below 0.5, the quality of an image displayed would considerably deteriorate.

On the other hand, if the ellipticity of elliptically polarized light, which is formed through the first polarization control element POL1 (or second polarization control element POL2) exceeds 0.8, the wavelength dependency increases, as mentioned above, and the difference from the ellipticity of light of other wavelength increases up to about 0.15. In particular, if the ellipticity exceeds 0.85, the hue of white that is displayed becomes yellowish, and the quality of an image displayed would considerably deteriorate.

As has been described above, in order to set the ellipticity of light with a wavelength of 550 nm between 0.5 and 0.85, the angle θ in the first polarization control element POL1 (or second polarization control element POL2) is set between 25° and 65°. Preferably, in order to set the ellipticity of light with a wavelength of 550 nm between 0.65 and 0.8, the angle θ in the first polarization control element POL1 (or second polarization control element POL2) is set between 28° and 40°, or between 48° and 57°.

When the first polarization control element POL1 (or second polarization control element POL2) having the above-described structure is applied to the liquid crystal display device according to the present embodiment, the angle θ is set in the above-described range. Thereby, the ellipticity of light with the wavelength of 550 nm, which is incident on the liquid crystal layer in the polarization state of elliptically polarized light, is set between 0.5 and 0.85, preferably between 0.65 and 0.8. Hence, the optical characteristics can be improved and a good display quality can be realized.

Taking the above into account, the angle θ in at least one (preferably, the angle θ in both) of the first polarization control element POL1 and second polarization control element POL2 is set in the range between 25° and 65°. In consideration of the range of the difference (less than 0.15) in ellipticity and the ellipticity (between 0.5 and 0.8) of light of 550 nm, it is desirable that the angle θ be set in a range between 25° or more and less than 40°, or in a range between more than 45° and 65° or less.

By setting the acute angle between the absorption axis of the polarizer plate and the slow axis of the phase plate in each polarization control element within the above-described range, it becomes possible to create a polarization state with an ellipticity in a predetermined range with respect to lights in the whole range of wavelengths between, e.g. 450 nm and 650 nm, which are used for color display. In addition, elliptically polarized light with a substantially uniform ellipticity can be used. In short, without combining a plurality of phase plates, i.e. a 1/2 wavelength plate and a 1/4 wavelength plate, it becomes possible to prevent degradation in optical characteristics due to the wavelength dependency of the retardation value in the single phase plate (1/4 wavelength plate).

Besides, a director (major-axis direction of liquid crystal molecules) 40D of homogeneously aligned liquid crystal molecules 40, which form the liquid crystal layer LQ, is set in a predetermined azimuth in the X-Y plane, that is, in an azimuth different from a reference azimuth, when the reference azimuth is set to agree with the Y axis that corresponds to the vertical direction of the screen. It is assumed that in the X-Y plane, the positive (+) direction of the arrow 40D in FIG. 3, which indicates the director of liquid crystal molecules 40, corresponds to a principal viewing-angle direction, and the negative (-) direction of the arrow 40D corresponds to a non-principal viewing-angle direction.

The alignment of liquid crystal molecules 40 can be controlled by the rubbing direction of the orientation film 20 of the array substrate AR and the orientation film 36 of the counter-substrate CT. Specifically, the rubbing direction of the orientation film 20 is set to agree with the positive direction of the arrow 40D, and the rubbing direction of the orientation film 36 is set to agree with the negative direction of the arrow 40D. In short, by setting the rubbing directions of the orientation films 20 and 36 in parallel and opposite directions, it is possible to form the liquid crystal layer LQ that is composed of liquid crystal molecules 40 which are homogeneously aligned in the direction of the director 40D.

Next, referring to FIG. 2, a description in greater detail is given of the image display operation in the transmissive liquid crystal display device whose display mode is a normally white mode.

Light, which passes through the liquid crystal layer LQ, behaves in the following manner in a voltage-off state. Backlight emitted from the backlight unit BL passes through the first polarization control element POL1 and is converted to, e.g. counterclockwise elliptically polarized light. The elliptically polarized light enters the liquid crystal layer LQ via the array substrate AR. While passing through the liquid crystal layer LQ, the elliptically polarized light is provided with a phase difference of $\pi$. That is, the light, which has passed through the liquid crystal layer LQ, is converted to clockwise elliptically polarized light, and the elliptically polarized light passes through the counter-substrate CT. Since the elliptically polarized light can pass through the second polarization control element POL2, it contributes to single-color light display corresponding to the color of the color filter 34.

On the other hand, light, which passes through the liquid crystal layer LQ behaves in the following manner in a voltage-on state. Like the voltage-off state, incident backlight from the array substrate AR side passes through the first polarization control element POL1 and is converted to, e.g. counterclockwise elliptically polarized light. The elliptically polarized light enters the liquid crystal layer LQ via the array substrate AR. For example, when the residual retardation in the liquid crystal layer LQ at the voltage-on time is 0, the elliptically polarized light undergoes no effect of a phase difference while passing through the liquid crystal layer LQ. Thus, the elliptically polarized light passes through the counter-substrate CT in the unchanged polarized state. This elliptically polarized light does not pass through the second polarization control element POL2. Thus, dark display, that is, black display, is effected.

As has been described above, in the transmissive liquid crystal display device, backlight is selectively transmitted to display an image.

In the case where a voltage is applied to the liquid crystal layer LQ, liquid crystal molecules at an interface of the substrate are not completely erected due to anchoring forces. Consequently, in usual cases, the residual retardation in the liquid crystal layer LQ at the voltage-on time is not 0, but is several to several-ten nm. In this case, if the retardation value of the first phase plate 52 of the first polarization control element POL1 is decreased by a degree corresponding to the residual retardation of the liquid crystal layer LQ, the polarized state of light that passes through the liquid crystal layer LQ becomes equal to the state in the case where the residual retardation in the liquid crystal layer LQ is 0. Therefore, black display can be executed with the same mechanism as described above.

Next, an optimal director (major-axis direction of liquid crystal molecules) 40D of homogeneously aligned liquid crystal molecules 40, which form the liquid crystal layer LQ, is discussed.

(Comparative Example)

A comparative example is first described. In a liquid crystal display device according to the comparative example, as shown in FIG. 4, a first polarization control element POL1, which is provided on the array substrate side of a liquid crystal display panel LPN, comprises one first polarizer plate 51 and one first phase plate (uniaxial 1/4 wavelength plate) 52. A second polarization control element POL2, which is provided on the counter-substrate side of the liquid crystal display panel LPN, comprises one second polarizer plate 61 and one second phase plate (uniaxial 1/4 wavelength plate) 62. As regards the liquid crystal display panel LPN, the liquid crystal composition of the liquid crystal layer and the gap are the same as those described above.

In the comparative example, a director 40D of liquid crystal molecules 40 is set in parallel to the Y axis (reference azimuth) in the X-Y plane. In this case, the director 40D is set in the negative direction of the Y axis, i.e. at a 270° azimuth relative to the X axis. The 270° azimuth, which corresponds to the lower side of the screen, is set to be the principal viewing-angle direction.

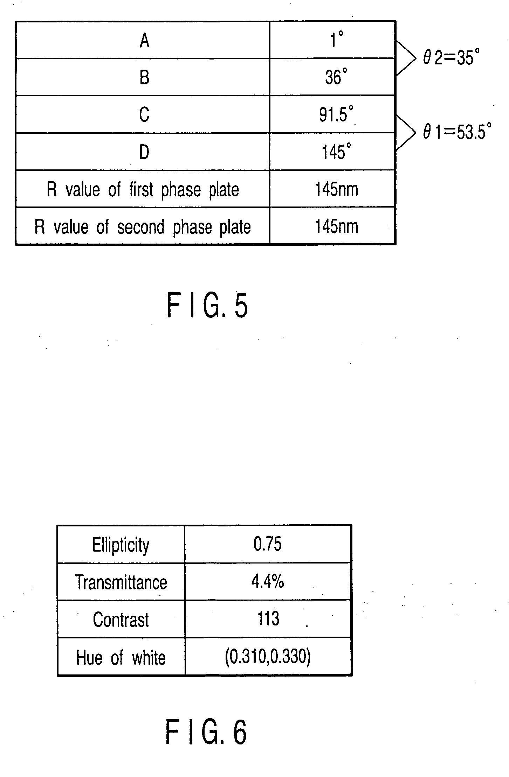

In the first polarization control element POL1 and second polarization control element POL2, the acute angle formed between the absorption axis of the polarizer plate and the slow axis of the phase plate is set in a range of 25° to 70°. Specifically, as shown in FIG. 5, the formed angle A is 1° and the formed angle B is 36°. Accordingly, an acute angle $\theta 2$ formed between the absorption axis 61T of the second polarizer plate 61 and the slow axis 62D of the second phase plate 62 is 35°. In addition, the formed angle C is 91.5°, and the formed angle D is 145°. Thus, an acute angle θ1 formed between the absorption axis 51T of the first polarizer plate 51 and the slow axis 52D of the first phase plate 52 is 53.5°. The retardation value (R value) of the first phase plate 52 is 145 nm with respect to light with a wavelength of 590 nm. The retardation value (R value) of the second phase plate 62 is 145 nm with respect to light with a wavelength of 590 nm.

The optical characteristics of the liquid crystal display device according to the comparative example with the above-described structure were measured.

As shown in FIG. 6, the device of comparative example is configured such that an ellipticity of 0.75 is obtained with respect to light with a wavelength of 550 nm, and substantially equal ellipticities are obtained in a wavelength range of 450 nm to 650 nm.

The comparative example has the following optical characteristics. In the comparative example, the transmittance was 4.4%. The measured transmittance corresponds to a ratio of the intensity of transmission light emanating from the liquid crystal display panel to the intensity of white backlight (incident light) that is made incident from the array substrate side of the liquid crystal display device. The transmittance was measured by means of a transmissiometer BM-5A (manufactured by TOPCON Corp.) The incident light is diffuse light that is incident in a direction substantially perpendicular to the array substrate (normal direction of the array substrate). The intensity of transmission light was measured by a detector that was disposed at a position with an inclination of 8° from the normal line of the counter-substrate.

In the comparative example, the contrast was 113. The contrast was measured by a measuring device BM-5A (manufactured by TOPCON Corp.) in a darkroom.

In the comparative example, the hue of white of an image displayed was (0.310, 0.330) on the chromaticity coordinates. The hue was measured as chromaticity coordinates values in parallel with the measurements using the above-mentioned measuring devices.

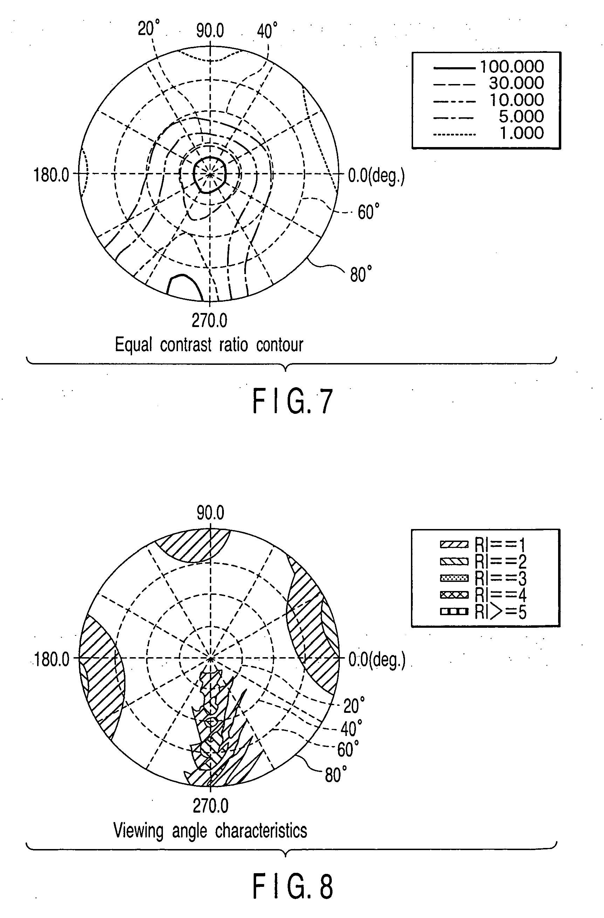

FIG. 7 is a characteristic diagram that simulates the viewing-angle dependency of contrast in the liquid crystal display device according to the comparative example. In the characteristic diagram, the center corresponds to the normal direction of the liquid crystal display panel. A 0 (deg) azimuth corresponds to the positive (+) direction on the X axis (the right side of the screen). A 180 (deg) azimuth corresponds to a negative (-) direction on the X axis (the left side of the screen). A 90 (deg) azimuth corresponds to a positive (+) direction on the Y axis (the upper side of the screen), and a 270 (deg) azimuth corresponds to a negative (-) direction on the Y axis (the lower side of the screen). Concentric circles that are defined about the normal direction indicate off-axis angles relative to the normal, and correspond to 20°, 40°, 60° and 80°, respectively. The characteristic diagram was prepared by plotting angles at which the contrast is equal in the respective directions.

As is clear from FIG. 7, in the comparative example, the viewing-angle dependency was improved in the upper and lower directions of the screen. In particular, it was confirmed that a decrease in contrast on the lower side of the screen (i.e. in the principal viewing-angle direction) was improved. The reason for this is that the ellipticity of elliptically polarized light that is incident on the liquid crystal display panel was improved and the retardation value of the liquid crystal layer was compensated by optimizing the first polarization control element POL1 and second polarization control element POL2, as described above.

FIG. 8 is a characteristic diagram that simulates the viewing-angle dependency of gray level inversion in the liquid crystal display device according to the comparative example. In the characteristic diagram, the center corresponds to the normal direction of the liquid crystal display panel. A 0 (deg) azimuth corresponds to the positive (+) direction on the X axis (the right side of the screen). A 180 (deg) azimuth corresponds to a negative (-) direction on the X axis (the left side of the screen). A 90 (deg) azimuth corresponds to a positive (+) direction on the Y axis (the upper side of the screen), and a 270 (deg) azimuth corresponds to a negative (-) direction on the Y axis (the lower side of the screen). Concentric circles that are defined about the normal direction indicate off-axis angles relative to the normal, and correspond to 20°, 40°, 60° and 80°, respectively. This characteristic diagram shows (gray level inversion) regions where the luminance (or transmittance) of a near-black gray level becomes higher than the luminance (or transmittance) of a near-white gray level.

As is shown in FIG. 8, in the comparative example, gray level inversion occurs in the vertical direction and horizontal direction of the screen. In particular, the gray level inversion on the lower side of the screen (principal viewing-angle direction) may be a factor of considerable degradation in display quality, when the application of the display device to mobile devices is considered.

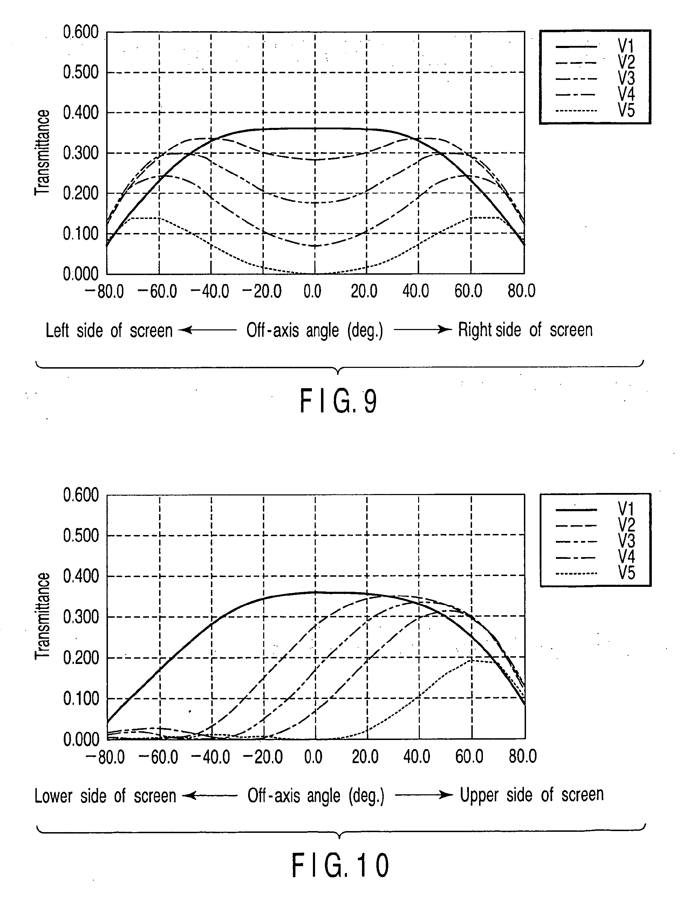

FIG. 9 and FIG. 10 are characteristic diagrams that simulate the viewing-angle dependency of transmittance in the horizontal direction and vertical direction of the screen, respectively. In FIG. 9, the abscissa indicates the off-axis angle to the normal of the screen. The off-axis angle toward the 0 (deg) azimuth of the screen (i.e. the right side of the screen) is indicated with a positive (+) sign, and the off-axis angle toward the 180 (deg) azimuth of the screen (i.e. the left side of the screen) is indicated with a negative (+) sign. In FIG. 10, the abscissa indicates the off-axis angle to the normal of the screen. The off-axis angle toward the 90 (deg) azimuth of the screen (i.e. the upper side of the screen) is indicated with a positive (+) sign, and the off-axis angle toward the 270 (deg) azimuth of the screen (i.e. the lower side of the screen) is indicated with a negative (+) sign. The ordinate indicates the transmittance of the liquid crystal display panel. In addition, V1, V2, V3, V4 and V5 indicate levels of voltages that are applied to the pixel electrodes. Specifically, V1 is an application voltage at a time when a gray-level image corresponding to white (i.e. transmittance = 100%) is displayed, V2 is an application voltage at a time when a gray-level image corresponding to transmittance = 80% is displayed, V3 is an application voltage at a time when a gray-level image corresponding to transmittance = 50% is displayed, V4 is an application voltage at a time when a gray-level image corresponding to transmittance = 20% is displayed, and V5 is an application voltage at a time when a gray-level image corresponding to black (i.e. transmittance = 0%) is displayed.

(First Embodiment)

Next, a first embodiment is described. In a liquid crystal display device according to the first embodiment, like the comparative example, as shown in FIG. 4, the first polarization control element POL1, which is provided on the array substrate side of the liquid crystal display panel LPN, comprises one first polarizer plate 51 and one first phase plate (uniaxial 1/4 wavelength plate) 52. The second polarization control element POL2, which is provided on the counter-substrate side of the liquid crystal display panel LPN, comprises one second polarizer plate 61 and one second phase plate (uniaxial 1/4 wavelength plate) 62. As regards the liquid crystal display panel LPN, the liquid crystal composition of the liquid crystal layer and the gap are the same as those in the comparative example.

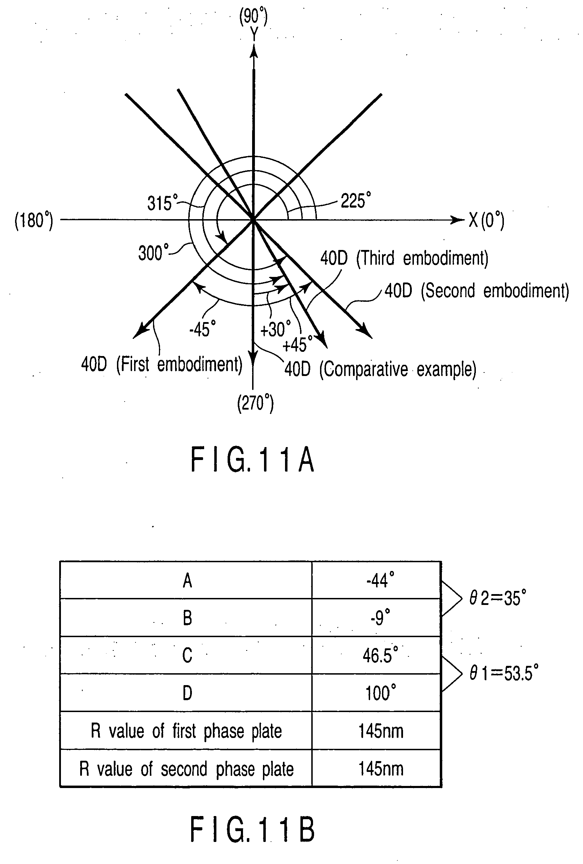

In the first embodiment, as shown in FIG. 11A, the director 40D of liquid crystal molecules 40 is set in an azimuth direction different from the Y axis (reference azimuth) in the X-Y plane. The director 40D is set at -45° azimuth, relative to the reference azimuth, when a clockwise direction relative to the reference azimuth in the screen is indicated with a negative sign and a counterclockwise direction relative to the reference azimuth in the screen is indicated with a positive sign. That is, the director (principal viewing-angle direction) 40D is set at a 225° azimuth relative to the X axis.

In the first polarization control element POL1 and second polarization control element POL2, the acute angle formed between the absorption axis of the polarizer plate and the slow axis of the phase plate is set in a range of 25° to 70°. Specifically, as shown in FIG. 11B, the formed angle A is -44° (316°) and the formed angle B is -9° (351°). Accordingly, an acute angle $\theta2$ formed between the absorption axis 61T of the second polarizer plate 61 and the slow axis 62D of the second phase plate 62 is 35°. In addition, the formed angle C is 46.5°, and the formed angle D is 100°. Thus, an acute angle $\theta1$ formed between the absorption axis 51T of the first polarizer plate 51 and the slow axis 52D of the first phase plate 52 is 53.5°. The retardation value (R value) of the first phase plate 52 is 145 nm with respect to light with a wavelength of 590 nm. The retardation value (R value) of the second phase plate 62 is 145 nm with respect to light with a wavelength of 590 nm.

The optical characteristics of the liquid crystal display device according to the first embodiment with the above-described structure were measured. Like the comparative example, the transmittance was 4.4% and the contrast was 113. The hue of white of an image displayed was (0.310, 0.330) on the chromaticity coordinates. In the first embodiment, too, the device is configured such that an ellipticity of 0.75 is obtained with respect to light with a wavelength of 550 nm, and substantially equal ellipticities are obtained in a wavelength range of 450 nm to 650 nm.

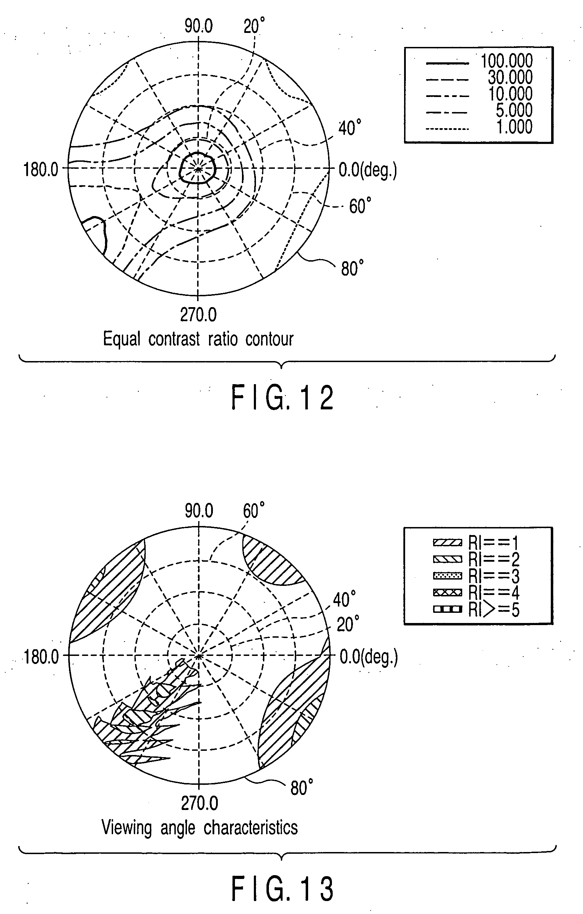

FIG. 12 is a characteristic diagram that simulates the viewing-angle dependency of contrast in the liquid crystal display device according to the first embodiment. As is shown in FIG. 12, the viewing-angle dependency was improved in the upper and lower directions of the screen. The reason for this is that the ellipticity of elliptically polarized light that is incident on the liquid crystal display panel was improved and the retardation value of the liquid crystal layer was compensated by optimizing the first polarization control element POL1 and second polarization control element POL2, as described above.

FIG. 13 is a characteristic diagram that simulates the viewing-angle dependency of gray level inversion in the liquid crystal display device according to the first embodiment. As is shown in FIG. 13, in the first embodiment, no gray level inversion was confirmed in the vertical direction or the horizontal direction of the screen.

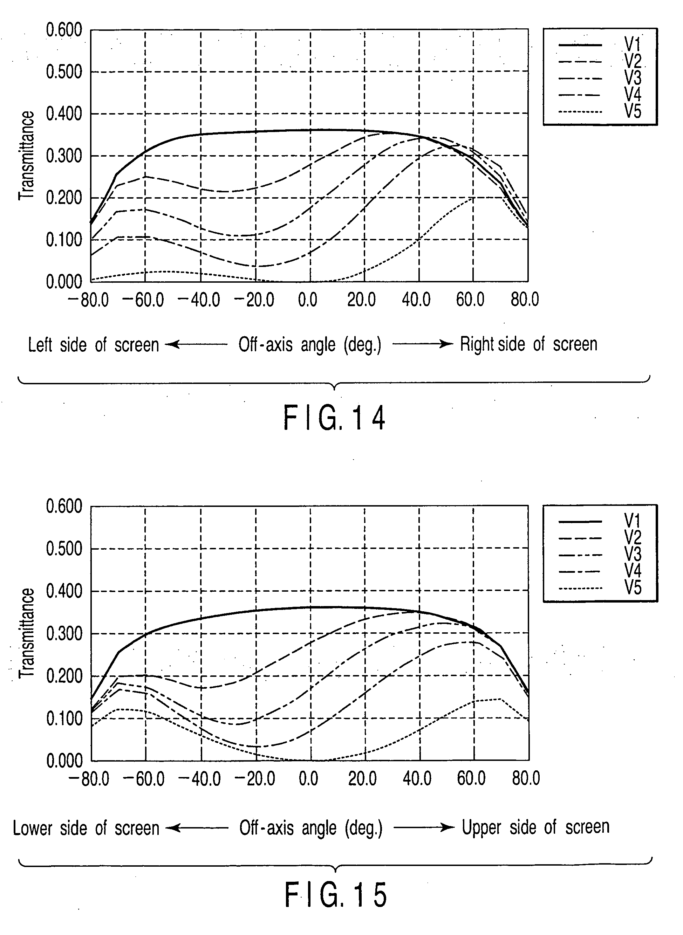

FIG. 14 and FIG. 15 are characteristic diagrams that simulate the viewing-angle dependency of transmittance in the horizontal direction and vertical direction of the screen, respectively. As shown in FIG. 14, in the first embodiment, there is a tendency that the distribution of transmittance becomes asymmetric in the horizontal direction, but it was confirmed that gray level inversion was suppressed over the wide viewing-angle range. Furthermore, as shown in FIG. 15, in the first embodiment, it was confirmed that gray level inversion was suppressed, in particular, in the viewing-angle range on the lower side of the screen.

(Second Embodiment)

Next, a second embodiment is described. In a liquid crystal display device according to the second embodiment, the liquid crystal display panel LPN, first polarization control element POL1 and second polarization control element POL2 have the same structures as in the first embodiment. In the second embodiment, as shown in FIG. 11A, the director 40D of liquid crystal molecules 40 is set at +45° azimuth, relative to the reference azimuth in the X-Y plane. That is, the director (principal viewing-angle direction) 40D is set at a 315° azimuth relative to the X axis.

The optical characteristics of the liquid crystal display device according to the second embodiment with the above-described structure were measured. The same result as in the first embodiment was obtained.

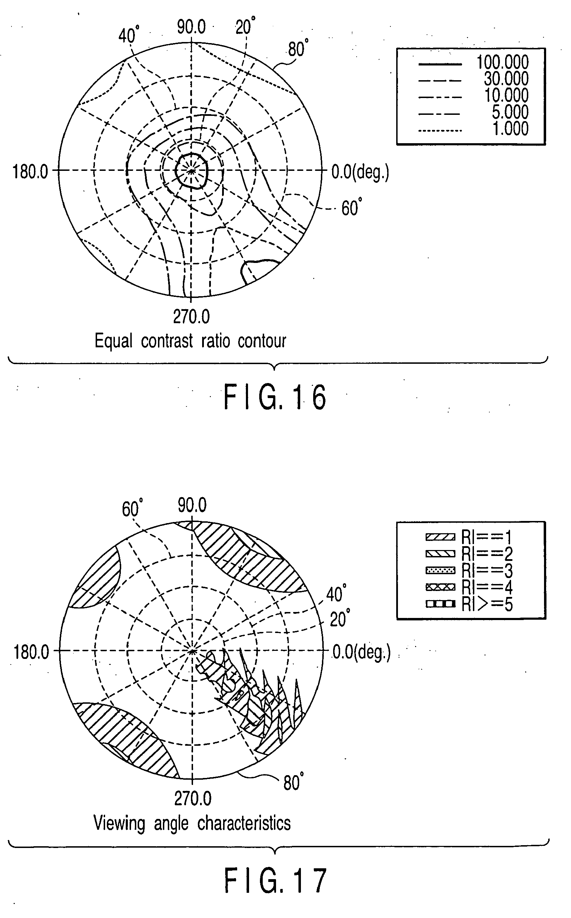

FIG. 16 is a characteristic diagram that simulates the viewing-angle dependency of contrast in the liquid crystal display device according to the second embodiment. As is shown in FIG. 16, in the second embodiment, it was confirmed that the viewing-angle dependency was improved in the upper and lower directions of the screen.

FIG. 17 is a characteristic diagram that simulates the viewing-angle dependency of gray level inversion in the liquid crystal display device according to the second embodiment. As is shown in FIG. 17, in the second embodiment, no gray level inversion was confirmed in the vertical direction or the horizontal direction of the screen.

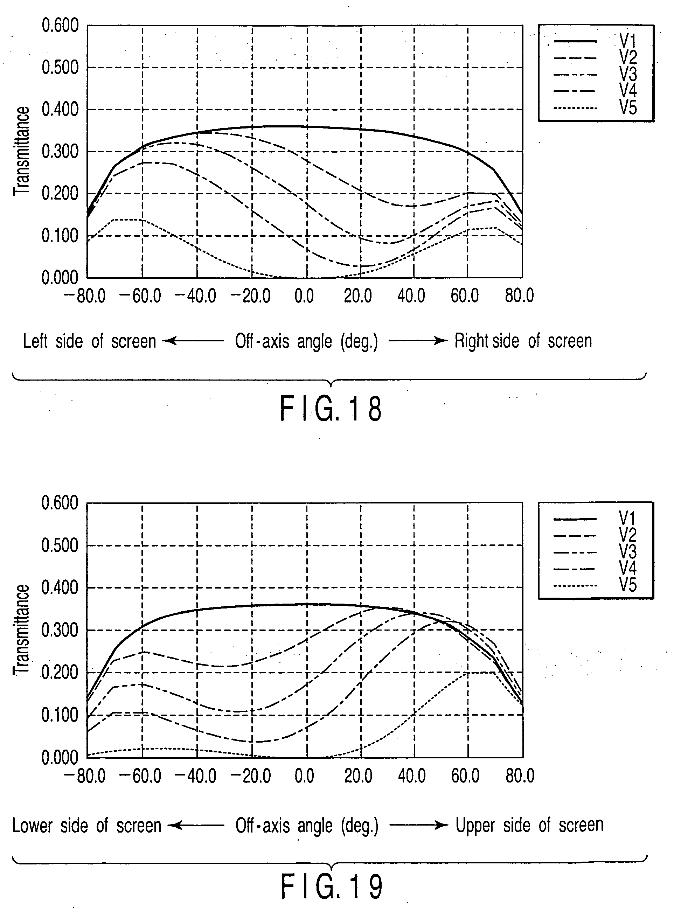

FIG. 18 and FIG. 19 are characteristic diagrams that simulate the viewing-angle dependency of transmittance in the horizontal direction and vertical direction of the screen, respectively. As shown in FIG. 18, in the second embodiment, there is a tendency that the distribution of transmittance at intermediate gradations indicated by V2, V3 and V4 becomes asymmetric in the horizontal direction. However, it was confirmed that the distribution of transmittance of white, as indicated by V1, and the distribution of transmittance of black, as indicated by V5, were symmetric in the horizontal direction and gray level inversion was suppressed over the wide viewing-angle range. According to the distribution of transmittance of black, it was found that the transmittance was reduced to a sufficiently low value on both the right and left sides. Furthermore, as shown in FIG. 19, in the second embodiment, it was confirmed that gray level inversion was suppressed, in particular, in the viewing-angle range on the lower side of the screen. According to the distribution of transmittance of black, it was found that the transmittance was reduced to a sufficiently low value, in particular, on the lower side of the screen.

(Third Embodiment)

Next, a third embodiment is described. In a liquid crystal display device according to the third embodiment, the liquid crystal display panel LPN, first polarization control element POL1 and second polarization control element POL2 have the same structures as in the first embodiment. In the third embodiment, the director 40D of liquid crystal molecules 40 is set at +30° azimuth, relative to the reference azimuth in the X-Y plane. That is, the director (principal viewing-angle direction) 40D is set at a 300° azimuth relative to the X axis.

The optical characteristics of the liquid crystal display device according to the third embodiment with the above-described structure were measured. The same result as in the first embodiment was obtained.

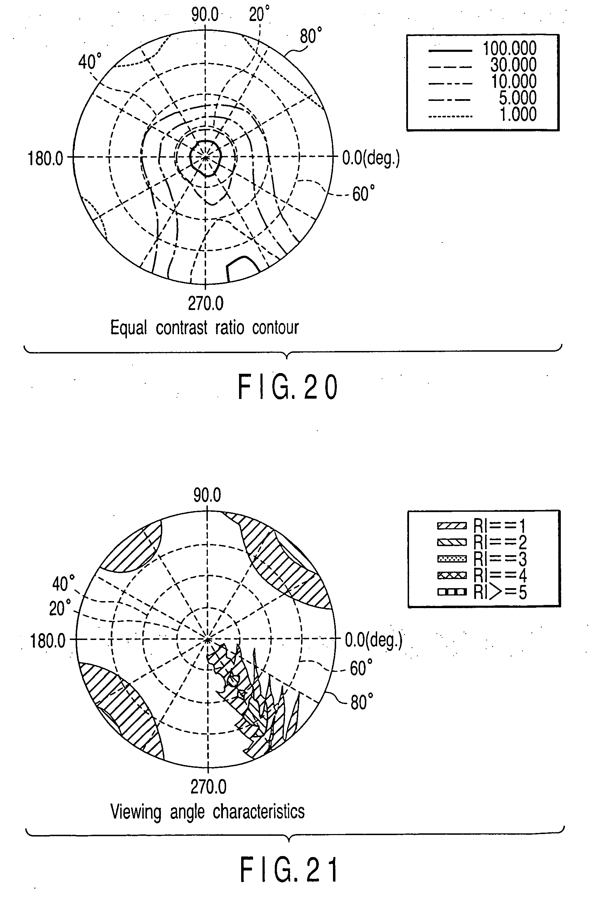

FIG. 20 is a characteristic diagram that simulates the viewing-angle dependency of contrast in the liquid crystal display device according to the third embodiment. As is shown in FIG. 20, in the third embodiment, it was confirmed that the viewing-angle dependency was improved in the upper and lower directions of the screen.

FIG. 21 is a characteristic diagram that simulates the viewing-angle dependency of gray level inversion in the liquid crystal display device according to the third embodiment. As is shown in FIG. 21, in the third embodiment, no gray level inversion was confirmed in the vertical direction or the horizontal direction of the screen.

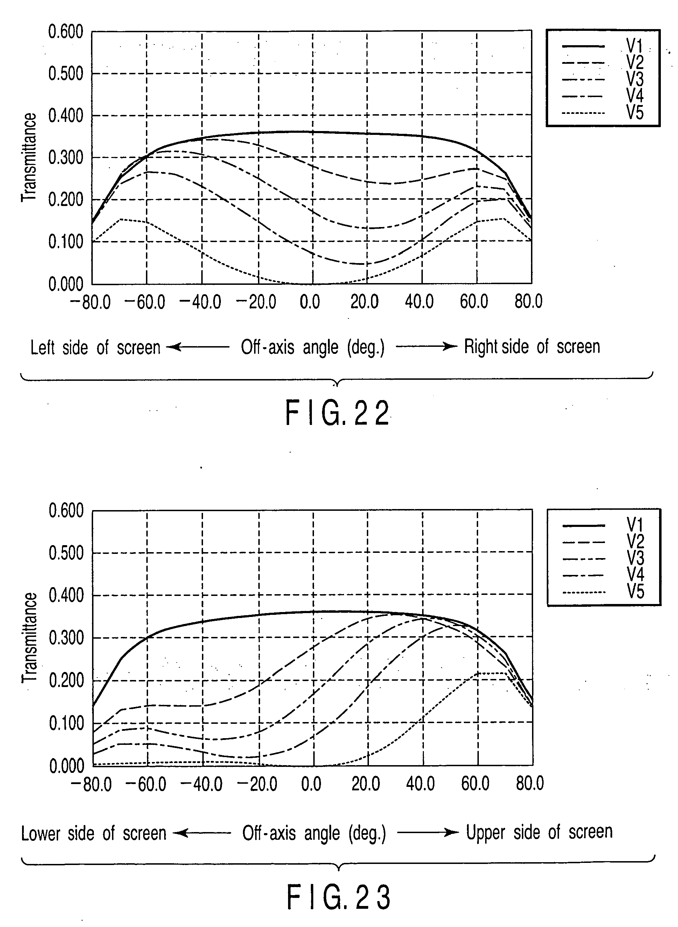

FIG. 22 and FIG. 23 are characteristic diagrams that simulate the viewing-angle dependency of transmittance in the horizontal direction and vertical direction of the screen, respectively. As shown in FIG. 22, in the third embodiment, there is a tendency that the distribution of transmittance at each of gray levels indicated by V1 to V5 becomes substantially symmetric in the horizontal direction. In addition, it was confirmed that gray level inversion was suppressed over the wide viewing-angle range. According to the distribution of transmittance of black, it was found that the transmittance was reduced to a sufficiently low value on both the right and left sides. As shown in FIG. 23, in the third embodiment, it was confirmed that gray level inversion was suppressed, in particular, in the viewing-angle range on the lower side of the screen. According to the distribution of transmittance of black, it was found that the transmittance was reduced to a sufficiently low value, in particular, on the lower side of the screen.

In the comparative example, as described above, when the vertical direction of the screen is set to be the reference azimuth, the director 40D of liquid crystal molecules 40 is set in the reference azimuth (i.e. 270° azimuth corresponding to the lower side of the screen). According to the comparative example, gray level inversion occurs in the direction of the director 40D. As regards the 270° azimuth direction, there is a strong demand for improvement in viewing-angle characteristics in consideration of the application of the liquid crystal display device to mobile devices, and it is necessary to suppress the gray level inversion.

According to the first to third embodiments wherein the director 40D is set in an azimuth direction different from the reference azimuth, it is possible to suppress gray level inversion in the 270° azimuth. To be more specific, on the basis of the first embodiment and second embodiment, it is preferable to set the director 40D in the range of -45° ±25°, or +45° ±10°. In the case of the structure of the embodiments, there is a tendency that the contrast distribution (transmittance distribution) basically becomes asymmetric in the horizontal direction. Thus, the ranges of tolerance are asymmetric between the rotation in the positive (+) direction and the rotation in the negative (-) direction, relative to the reference azimuth.

As is clear from FIG. 14 corresponding to the first embodiment and FIG. 18 corresponding to the second embodiment, when the director 40D is set in the -45° azimuth relative to the reference azimuth, the distribution of transmittance in the horizontal direction becomes asymmetric. On the other hand, when the director 40D is set in the +45° azimuth relative to the reference azimuth, the distribution of transmittance in the horizontal direction becomes symmetric. It is thus desirable to set the director 40D in the range of +45° ±10° relative to the reference azimuth, when there is the need to make the transmittance distribution symmetric in the horizontal direction, while suppressing gray level inversion in the vertical and horizontal directions of the screen. Further, as is clear from FIG. 22 corresponding to the third embodiment, it is desirable to set the director 40D in the range of +30° ±15° relative to the reference azimuth, in order to realize an optimal configuration for achieving both suppression of gray level inversion and horizontal symmetry of transmittance distribution.

Moreover, according to the above-described first to third embodiments, each of the polarization control elements provided on the array substrate side and the counter-substrate side is composed of a single polarizer plate and a single phase plate. Thus, the number of phase plates can be reduced, the thickness of each polarization control element can be decreased, the thickness of the whole apparatus can be decreased, and the manufacturing cost can be reduced.

Besides, the absorption axis of the polarizer plate and the slow axis of the phase plate are set at optimal angles relative to the director of liquid crystal molecules. Thus, even in the case of adopting the polarization control element with the reduced number of phase plates, good optical characteristics can be realized. In particular, the viewing angle in the vertical direction of the screen can be increased, and the viewing-angle dependency of contrast can be improved.

The present invention is not limited to the above-described embodiments. In practicing the invention, structural elements may be modified and embodied without departing from the spirit of the invention. A plurality of structural elements disclosed in the embodiments may be properly combined to constitute various inventions. For example, some of the structural elements in the embodiments may be omitted. Furthermore, structural elements in different embodiments may be properly combined.

In the above-described comparative example and the first to third embodiments, a ZEONOR film (manufactured by Sumitomo Chemical Co., Ltd. and Nitto Denko Corp.), which is a uniaxial 1/4 wavelength plate, was used as each of the phase plates 52 and 62. Alternatively, another similar uniaxial 1/4 wavelength plate, such as an ESCENA (phonetic) film (manufactured by Sekisui Chemical Co., Ltd.) or an ARTON film (manufactured by Sumitomo Chemical Co., Ltd. and Nitto Denko Corp.), may be used. If a biaxial phase plate, such as a PC film (manufactured by Nitto Denko Corp.), is used, a decrease in luminance in the principal viewing-angle direction can be more improved. In this case, it is preferable to use a biaxial phase plate with an Nz coefficient of 0 to 0.7. The Nz coefficient is a value defined by $Nz = (nx - nz)/(nx - ny)$, where $nx$ and $ny$ are refractive indices in azimuths, which intersect at right angles with each other in a plane of the phase plate, and $nz$ is a refractive index in a normal-line direction of the phase plate.

Each of the first polarization control element POL1 and second polarization control element POL2 may be formed by attaching a high-polymer-film phase plate to a polarizer plate, or by disposing a liquid crystal film on a polarizer plate. The polarization control element including a liquid crystal film can be formed by coating a liquid crystal composition, for instance, a liquid crystal composition including nematic liquid crystal, on a polarizer plate and then curing the liquid crystal composition. In this case, the thickness of the liquid crystal film is set so as to obtain a desired retardation value. When the polarization control element including such a liquid crystal film is to be applied, there arises no problem if the director of the liquid crystal molecules in the liquid crystal film is made to agree with the aforementioned slow axis.

In the embodiments, the switching element W is formed of an N-channel thin-film transistor. Alternatively, other architectures may be adopted if similar driving signals can be produced.

## Claims

1. A liquid crystal display device including a plurality of pixels arranged in a matrix, the device **characterized by** comprising:

   a transmissive liquid crystal display panel (LPN) in which a liquid crystal layer (LQ) is held between a first substrate (AR) and a second substrate (CT) that are disposed to face each other;
   a first polarization control element (POL1) provided on an outer surface of the first substrate, which is opposed to a surface of the first substrate that holds the liquid crystal layer, the first polarization control element being configured to pass light in a polarization state of elliptically polarized light; and
   a second polarization control element (POL2) provided on an outer surface of the second substrate, which is opposed to a surface of the second substrate that holds the liquid crystal layer, the second polarization control element being configured to pass light in a polarization state of elliptically polarized light, whose direction of rotation is opposite to a direction of rotation of the elliptically polarized light that is passed through the first polarization control element,

   wherein when a vertical direction of a screen is set to be a reference azimuth (Y), the liquid crystal layer includes liquid crystal molecules (40) that are homogeneously aligned in an azimuth that is different from the reference azimuth.

2. The liquid crystal display device according to claim 1, **characterized in that** when a clockwise direction relative to the reference azimuth in the screen is indicated with a negative sign and a counterclockwise direction relative to the reference azimuth in the screen is indicated with a positive sign, a director (40D) of the liquid crystal molecules is set in a range of -45° ±25° or in a range of +45° ±10°, relative to the reference azimuth.

3. The liquid crystal display device according to claim 1, **characterized in that** when a clockwise direction relative to the reference azimuth in the screen is indicated with a negative sign and a counterclockwise direction relative to the reference azimuth in the screen is indicated with a positive sign, a director (40D) of the liquid crystal molecules is set in a range of +30° ±15°, relative to the reference azimuth.

4. The liquid crystal display device according to claim 1, **characterized in that** at least one of the first polarization control element and the second polarization control element comprises one polarizer plate (51, 61) and one phase plate (52, 62).

5. The liquid crystal display device according to claim 4, **characterized in that** the phase plate is a 1/4 wavelength plate that provides a phase difference of 1/4 wavelength between an ordinary ray and an extraordinary ray with respect to light of a predetermined wavelength.

6. The liquid crystal display device according to claim 4, **characterized in that** at least one of the first polarization control element and the second polarization control element, an acute angle formed between an absorption axis (51T, 61T) of the polarizer plate and a slow axis (52D, 62D) of the phase plate is set in a range of 25° to 70°.

7. The liquid crystal display device according to claim 4, **characterized in that** at least one of the first polarization control element and the second polarization control element, an acute angle formed between an absorption axis (51T, 61T) of the polarizer plate and a slow axis (52D, 62D) of the phase plate is set in a range between 25° or more and less than 40°, or in a range between more than 45° and 65° or less.

8. The liquid crystal display device according to claim 7, **characterized in that** an ellipticity of light with a wavelength of 550 nm, which passes through at least one of the first polarization control element and the second polarization control element, is between 0.5 and 0.85.

9. The liquid crystal display device according to claim 7, **characterized in that** a difference between a maximum value and a minimum value of ellipticity of light in a range of wavelengths of 450 nm to 650 nm, which passes through at least one of the first polarization control element and the second polarization control element, is less than 0.15.

10. The liquid crystal display device according to claim 1, **characterized by** further comprising a backlight unit (BL) that illuminates the liquid crystal display panel from the first polarization control element side.

11. The liquid crystal display device according to claim 1, **characterized in that** a display mode is a normally white mode.

FIG. 1

LPN

POL2

CT

LQ

AR

POL1

BL

ET

40

34

EP

WD

WG

WS

20

12D

12 W

12C

12S

18

16

14

10

52

51

61

62

30

32

34

36

PX

FIG.2

FIG. 3

FIG. 4

| | | |
|---|---|---|
| A | 1° | |
| B | 36° | θ2=35° |
| C | 91.5° | |
| D | 145° | θ1=53.5° |
| R value of first phase plate | 145nm | |
| R value of second phase plate | 145nm | |

# FIG. 5

| | |
|---|---|
| Ellipticity | 0.75 |
| Transmittance | 4.4% |
| Contrast | 113 |
| Hue of white | (0.310,0.330) |

# FIG. 6

20°   90.0   40°

| | 100.000 |
|---|---|
| | 30.000 |
| | 10.000 |
| | 5.000 |
| | 1.000 |

180.0   0.0(deg.)

60°

80°

270.0

Equal contrast ratio contour

# FIG. 7

90.0

| | RI==1 |
|---|---|
| | RI==2 |
| | RI==3 |
| | RI==4 |
| | RI>=5 |

180.0   0.0(deg.)

20°
40°
60°
80°

270.0

Viewing angle characteristics

# FIG. 8

Left side of screen ◄——— Off-axis angle (deg.) ———► Right side of screen

F I G. 9

Lower side of screen ◄——— Off-axis angle (deg.) ———► Upper side of screen

F I G. 1 0

(90°)
Y

(180°) ——————————————————————→ X (0°)

315° 225°

300°

40D (Third embodiment)

40D (Second embodiment)

-45° +30°
+45°

40D (First embodiment) 40D (Comparative example)

(270°)

# FIG.11A

| A | -44° | $\theta 2 = 35°$ |
|---|------|---|
| B | -9° | |
| C | 46.5° | $\theta 1 = 53.5°$ |
| D | 100° | |
| R value of first phase plate | 145nm | |
| R value of second phase plate | 145nm | |

# FIG.11B

Equal contrast ratio contour

FIG. 12

Viewing angle characteristics

FIG. 13

Left side of screen ◄——— Off-axis angle (deg.) ———► Right side of screen

FIG. 14

Lower side of screen ◄——— Off-axis angle (deg.) ———► Upper side of screen

FIG. 15

Equal contrast ratio contour

FIG.16

Viewing angle characteristics

FIG.17

Left side of screen ◄──── Off-axis angle (deg.) ────► Right side of screen

FIG. 18

Lower side of screen ◄──── Off-axis angle (deg.) ────► Upper side of screen

FIG. 19

Equal contrast ratio contour

# FIG.20

Viewing angle characteristics

# FIG.21

FIG. 22

FIG. 23